# EUROPÄISCHE PATENTANMELDUNG

(11) **EP 1 253 771 A1**
(43) Veröffentlichungstag der Anmeldung: **30.10.2002**
(21) Anmeldenummer: 01250147.4
(22) Anmeldetag: 26.04.2001
(51) Int. Cl.: H04M 15/00, H04M 17/00, G06F 17/00, G06F 17/60, G06F 19/00

(54) **Verfahren zum Abrechnen von Kommunikationsgebühren**

(71) Anmelder: SIEMENS AKTIENGESELLSCHAFT, 80333 München (DE)
(72) Erfinder: Aschir, Alexander, 13583 Berlin (DE)

(57) **Zusammenfassung**

Die Erfindung betrifft ein Verfahren zum Abrechnen von bei Benutzung eines Kommunikationsendgerätes (3) auftretenden Kommunikationsgebühren, bei dem ein dem Kommunikationsendgerät (3) zugeordnetes Gebührenkonto (GK) mit den Kommunikationsgebühren für die jeweilige Kommunikationsverbindung belastet wird. Um eine flexible und an die jeweilige Art der Benutzung des Kommunikationsendgerätes (3) angepasste Abrechnung von Kommunikationsgebühren zu ermöglichen, wird bei dem erfindungsgemäßen Verfahren mindestens ein Zusatzgebührenkonto (ZK1) neben dem Gebührenkonto (GK) zur Gebührenabrechnung verwendet, die jeweilige Kommunikationsverbindung (KV) auf ein Auftreten von vorbestimmten Kommunikationsverbindungseigenschaften untersucht und in Abhängigkeit vom Auftreten der vorbestimmten Kommunikationsverbindungseigenschaften entweder das Gebührenkonto (GK) oder das mindestens eine Zusatzgebührenkonto (ZK1) mit den Kommunikationsgebühren belastet.

## Beschreibung

### Verfahren zum Abrechnen von Kommunikationsgebühren

Die Erfindung betrifft ein Verfahren zum Abrechnen von bei Benutzung eines Kommunikationsendgerätes auftretenden Kommunikationsgebühren, bei dem ein dem Kommunikationsendgerät zugeordnetes Gebührenkonto mit den Kommunikationsgebühren für die jeweilige Kommunikationsverbindung belastet wird.

Es ist allgemein bekannt, dass Kommunikationsgebühren, die im Zusammenhang mit der Benutzung eines Kommunikationsendgerätes auftreten, auf einem diesem Kommunikationsendgerät zugeordneten Gebührenkonto verbucht werden. Abhängig von der Art des Gebührenkontos und einem evtl. zwischen einem Kommunikationsnetzbetreiber und einem Besitzer des Kommunikationsendgerätes abgeschlossenen Vertrag werden die (auf dem Gebührenkonto verbuchten) zu zahlenden Kommunikationsgebühren auf unterschiedliche Weise bezahlt. Dies kann beispielsweise durch Bankeinzug oder durch eine Geldüberweisung von einem Bankkonto geschehen.

Alle von Seiten des Kommunikationsendgerätes zu tragenden Gebühren werden dabei über dieses eine Gebührenkonto abgerechnet.

Der Erfindung liegt die Aufgabe zugrunde, ein Verfahren anzugeben, das eine flexible und an die jeweilige Art der Benutzung des Kommunikationsendgerätes angepasste Abrechnung von Kommunikationsgebühren ermöglicht.

Diese Aufgabe wird bei einem Verfahren der eingangs angegebenen Art erfindungsgemäß dadurch gelöst, dass mindestens ein Zusatzgebührenkonto neben dem Gebührenkonto zur Gebührenabrechnung verwendet wird, die jeweilige Kommunikationsverbindung auf ein Auftreten von vorbestimmten Kommunikationsverbindungseigenschaften untersucht wird und in Abhängigkeit vom Auftreten der vorbestimmten Kommunikationsverbindungseigenschaften entweder das Gebührenkonto oder eines der Zusatzgebührenkonten mit den Kommunikationsgebühren belastet wird. Hierbei ist insbesondere vorteilhaft, dass durch das Erkennen des Auftretens von vorbestimmten Kommunikationsverbindungseigenschaften verschiedene Arten von Kommunikationsverbindungen unterschieden werden können und die Kommunikationsgebühren für die unterschiedlichen Arten von Kommunikationsverbindungen auf unterschiedliche Konten (Gebührenkonto und ein oder mehrere Zusatzgebührenkonten) verbucht werden können. Dadurch ist eine sehr übersichtliche Art der Gebührenabrechnung möglich und eine später eventuell notwendige Trennung von lediglich auf einem einzigen Konto verrechneten Gebühren ist nicht notwendig.

Das erfindungsgemäße Verfahren kann so ausgestaltet sein, dass als eines der Zusatzgebührenkonten ein endgeräteigenes Zusatzgebührenkonto verwendet wird, das dem Kommunikationsendgerät zugeordnet ist.

Das erfindungsgemäße Verfahren kann auch derart ausgestaltet sein, dass als eines der Zusatzgebührenkonten ein fremdgeräteigenes Zusatzgebührenkonto verwendet wird, das einem anderen Endgerät als dem Kommunikationsendgerät zugeordnet ist. Dadurch können vorteilhafterweise Zusatzgebührenkonten verwendet werden, die verschiedenen Kommunikationsendgeräten zugeordnet sind, wodurch eine differenzierte Abrechnung der Kommunikationsgebühren ermöglicht wird.

Das erfindungsgemäße Verfahren kann derart ausgestaltet sein, dass als Gebührenkonto ein vorausbezahltes Gebührenkonto belastet wird. Ein vorausbezahltes Gebührenkonto wird auch als Pre-Paid-Gebührenkonto bezeichnet. Bei einem solchen Pre-Paid-Gebührenkonto ist vorteilhaft, dass die Höhe der Gebühren, die für die Realisierung von Kommunikationsverbindungen ausgegeben werden können, durch die Höhe des vorausgezahlten Guthabens beschränkt ist. Dadurch ist eine Kostenkontrolle gegeben. Beispielsweise wird diese Art von Gebührenkonto bevorzugt für Kinder angewendet, deren Eltern eine Kostenkontrolle über die durch die Kinder verursachten Kommunikationsgebühren haben wollen.

Das erfindungsgemäße Verfahren kann auch derart ausgestaltet sein, dass als Zusatzgebührenkonto ein nachbelastbares Zusatzgebührenkonto verwendet wird, welches nach Beendigung der Kommunikationsverbindung belastet wird. Ein solches nachbelastbares Gebührenkonto wird auch als Post-Paid-Konto bezeichnet. Es kann beispielsweise dann vorteilhaft angewendet werden, wenn die Höhe der auftretenden Kommunikationsgebühren im voraus schwer abzuschätzen ist und somit ein Gebührenkonto wünschenswert ist, das mit in der Höhe unbeschränkten Kommunikationsgebühren belastet werden kann.

Das erfindungsgemäße Verfahren kann so ausgestaltet sein, dass bei der Belastung des Gebührenkontos und der Belastung des Zusatzgebührenkontos unterschiedliche Gebührentarife verwendet werden. Dadurch ist es möglich, die Kommunikationsgebührentarife an die Kommunikationsverbindungseigenschaften und damit also an verschiedene Arten von Kommunikationsverbindungen anzupassen.

Das erfindungsgemäße Verfahren kann so ausgestaltet sein, dass die Belastung des Gebührenkontos und die Belastung des Zusatzgebührenkontos von verschiedenen Kostenträgern getragen werden. Hierbei ist beispielsweise vorteilhaft, dass unterschiedliche Arten von Kommunikationsverbindungen von verschiedenen Zahlungsstellen bezahlt werden können, so dass in einer einfachen Art und Weise verschiedene Arten von Kommunikationsgebühren verschiedenen Zahlungsstellen in Rechnung gestellt werden können. Eine spätere aufwendige Trennung der Kommunikationsgebühren nach verschiedenen Zahlungsstellen wird unnötig.

Das erfindungsgemäße Verfahren kann so ausgestaltet sein, dass das Zusatzgebührenkonto belastet wird, wenn von dem Kommunikationsendgerät aus eine Kommunikationsverbindung zu einem Ziel-Kommunikationsendgerät aufgebaut wird, welches zu einer vorbestimmten Auswahl von Ziel-Kommunikationsendgeräten gehört, und das Gebührenkonto belastet wird, wenn von dem Kommunikationsendgerät aus eine Kommunikationsverbindung zu anderen Ziel-Kommunikationsendgeräten aufgebaut wird. Hierbei ist es besonders vorteilhaft, dass durch eine entsprechende Gestaltung der vorbestimmten Auswahl von Zielkommunikationsendgeräten festgelegt werden kann, mit welchen Kommunikationsgebühren das Zusatzgebührenkonto belastet wird. In einem Beispiel kann die vorbestimmte Auswahl all diejenigen Zielkommunikationsendgeräte beinhalten, die von dem Kommunikationsendgerät aus im Zusammenhang mit einem Arbeits-Projekt angerufen werden. Die dabei auftretenden Kommunikationsgebühren werden dann über das Zusatzgebührenkonto abgerechnet, welches in diesem Beispiel für das Arbeits-Projekt eingerichtet ist.

Das erfindungsgemäße Verfahren kann auch derart ausgestaltet sein, dass beim Aufbau einer Kommunikationsendgerät von einem Ruf-Kommunikationsendgerät aus, welches zu einer vorbestimmten Auswahl von Ruf-Kommunikationsendgeräten gehört, das Gebührenkonto belastet wird, und beim Aufbau einer Kommunikationsverbindung zu dem Kommunikationsendgerät von einem anderen Ruf-Kommunikationsendgerät aus ein diesem Ruf-Kommunikationsendgerät zugeordnetes Zusatzgebührenkonto belastet wird. Dabei ist besonders vorteilhaft, dass das Gebührenkonto des Kommunikationsendgerätes auch dann mit Kommunikationsgebühren belastet wird, wenn von einem speziellen Ruf-Kommunikationsendgerät aus das Kommunikationsendgerät angerufen wird. Dadurch kann auch bei dieser Art von Rufen beispielsweise ein günstiger Tarif genutzt werden, welcher für das Gebührenkonto angewandt wird. Bei dem Zusatzgebührenkonto des Ruf-Kommunikationsendgerätes kann es sich z. B. um dasjenige Gebührenkonto handeln, über welches gewöhnlich die von dem Ruf-Kommunikationsendgerät ausgehenden Rufe abgerechnet werden.

Das erfindungsgemäße Verfahren kann so ausgestaltet sein, dass als Kommunikationsverbindungseigenschaft der Zeitpunkt der Realisierung der Kommunikationsverbindung ausgewertet wird. Somit kann in Abhängigkeit von beispielsweise Tageszeit, Wochentag, Monat oder Jahr oder in Abhängigkeit vom Auftreten von Feiertagen, Urlaubstagen oder Dienstreisetagen festgelegt werden, ob die Kommunikationsgebühren über das Gebührenkonto über eines der Zusatzgebührenkonten abgerechnet werden sollen.

Weiterhin kann das erfindungsgemäße Verfahren derart ausgestattet sein, dass als Kommunikationsverbindungseigenschaft der Kontostand des Gebührenkontos oder des Zusatzgebührenkontos zum Zeitpunkt der Realisierung der Kommunikationsverbindung ausgewertet wird. Somit kann vorteilhafterweise bei der Auswertung der Kommunikationsverbindungseigenschaft und damit bei der Bestimmung des zu nutzenden Kontos der Kontostand des Gebührenkontos und die Kontostände der Zusatzgebührenkonten berücksichtigt werden. Es kann beispielsweise im Falle, dass ein vorausbezahltes Gebührenkonto kein vorausbezahltes Guthaben mehr aufweist, ein Zusatzgebührenkonto belastet werden, bei welchem eine solche Belastung noch möglich ist.

Das erfindungsgemäße Verfahren kann so ausgestaltet sein, dass die Auswertung der Kommunikationsverbindungseigenschaften von einem intelligenten Knoten eines eine Struktur eines Intelligenten Netzes (IN) aufweisenden Kommunikationsnetzes durchgeführt wird. Hierbei ist vorteilhaft, dass ein intelligenter Knoten mit geringem Aufwand zur Realisierung des erfindungsgemäßen Verfahrens vorbereitet und eingesetzt werden kann.

Zur weiteren Erläuterung der Erfindung ist in
Figur 1 ein Ausführungsbeispiel einer Anordnung mit einem Telekommunikationsnetz zur Durchführung des erfindungsgemäßen Verfahrens und in
Figur 2 ein weiteres Ausführungsbeispiel einer Anordnung zur Durchführung des erfindungsgemäßen Verfahrens dargestellt.

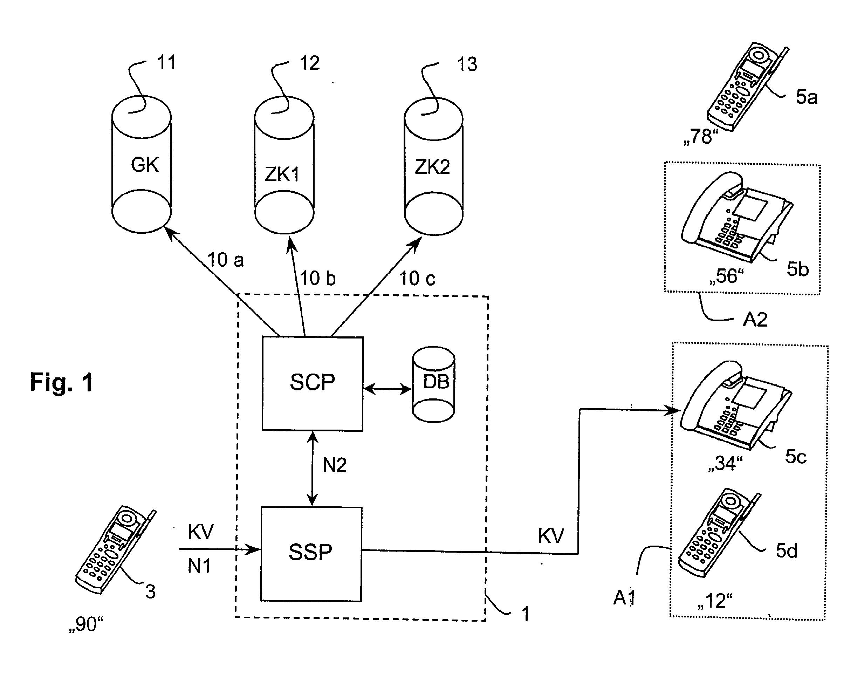

In Figur 1 ist schematisch ein Kommunikationsnetz 1 dargestellt, mit dem ein Kommunikationsendgerät 3 in Form eines Mobiltelefons verbunden ist. Das Kommunikationsendgerät 3 hat eine Adresse in Form z. B. einer Rufnummer "90". Weiterhin sind Zielkommunikationsendgeräte 5a, 5b, 5c und 5d dargestellt, mit denen das Kommunikationsendgerät 3 über das Kommunikationsnetz 1 in Verbindung treten kann. Die Zielkommunikationsendgeräte 5b und 5c sind als Festnetztelefon gestaltet; die Zielkommunikationsendgeräte 5a und 5d sind als Mobiltelefon ausgeprägt. Die verschiedenen Ausprägungen der Endgeräte sind jedoch nur als Beispiel zu verstehen, ebenso ist es beispielsweise möglich, dass als Endgeräte Computerterminals, tragbare Computer (Laptops) oder PDAs (Personal Digital Assistents) verwendet werden. Die Zielkommunikationsendgeräte 5c und 5d gehören zu einer ersten vorbestimmten Auswahl A1 von Zielkommunikationsendgeräten, das Zielkommunikationsendgerät 5b bildet eine zweite vorbestimmte Auswahl A2 von Zielkommunikationsendgeräten und das Zielkommunikationsendgerät 5a gehört keiner vorbestimmten Auswahl von Zielkommunikationsendgeräten an.

In dem Kommunikationsnetz 1 ist als Vermittlungsstelle ein Dienstevermittlungspunkt SSP (Service Switching Point) und als intelligenter Knoten ein Dienstesteuerpunkt SCP (Service Control Point) enthalten. Das Kommunikationsnetz 1 weist damit eine typische Struktur eines intelligenten Netzes (IN = Intelligent Network) auf. Der Dienstesteuerpunkt SCP ist in der Lage, mit verschiedenen Kontoführungseinrichtungen zu kommunizieren, d. h. Konten mit Kommunikationsgebühren zu belasten. Im einzelnen handelt es sich bei den Kontoführungseinrichtungen im vorliegenden Ausführungsbeispiel um eine erste Kontoführungseinrichtung 11 für ein Gebührenkonto GK, eine zweite Kontoführungseinrichtung 12 für ein Zusatzgebührenkonto ZK1 und eine dritte Kontoführungseinrichtung 13 für ein zweites Zusatzgebührenkonto ZK2. Die Zusatzgebührenkonten ZK1 und ZK2 sind Beispiele für endgeräteeigene Zusatzgebührenkonten, die dem Kommunikationsendgerät 3 zugeordnet sind. Die Kontoführungseinrichtungen 11 bis 13 können außerhalb des Kommunikationsnetzes 1 angeordnet sein und mit dem Dienstesteuerpunkt SCP über Nachrichtenverbindungen 10a, 10b und 10c verbunden sein, wie in der Figur 1 dargestellt ist. Es ist jedoch ebenfalls möglich, dass diese drei Kontoführungseinrichtungen innerhalb des Kommunikationsnetzes angeordnet sind; sie können beispielsweise auf einem Rechner realisiert sein, der auch der Realisierung des Dienstesteuerpunktes SCP dient. Der Dienstesteuerpunkt SCP ist mit einer Datenbank DB verbunden. In dieser Datenbank DB sind z. B. Informationen über die oben erwähnte erste vorbestimmte Auswahl A1 von Zielkommunikationsendgeräten und die zweite vorbestimmte Auswahl A2 von Zielkommunikationsendgeräten abgespeichert.

Im folgenden soll beispielhaft eine konkrete Situation beschrieben werden, bei der sich das erfindungsgemäße Verfahren und die erfindungsgemäße Anordnung anwenden lassen. Das Kommunikationsendgerät 3 soll in diesem Beispiel von einem Kind benutzt werden, dessen Eltern über die Zielkommunikationsendgeräte 5c und 5d verfügen. Dem Kommunikationsendgerät 3 sind die Kontoführungseinrichtungen 11 bis 13 für das Gebührenkonto GK, das erstes Zusatzgebührenkonto ZK1 und das zweite Zusatzgebührenkonto ZK2 zugeordnet. Bei dem Gebührenkonto GK handelt es sich um ein Pre-Paid-Gebührenkonto, d. h. um ein Konto, auf dem sich ein voraus bezahltes Gebührenguthaben befindet, welches von dem Kind durch Benutzung seines Kommunikationsendgerätes 3 verbraucht werden kann. Bei dem ersten Zusatzgebührenkonto ZK1 handelt es sich um ein Post-Paid-Konto, also um ein Konto, auf dem die auflaufenden Kommunikationsgebühren gebucht und nach Beendigung der die Gebühren verursachenden Kommunikationsverbindung einem Zahlungspflichtigen in Rechnung gestellt werden. In diesem Falle werden die Zahlungspflichtigen für das erste Zusatzgebührenkonto ZK1 durch die Eltern des Kindes, also durch die Benutzer der Zielkommunikationsendgeräte 5c und 5d, gebildet.

Die Zielkommunikationsendgeräte 5c und 5d gehören zu der Auswahl A1 an Zielkommunikationsendgeräten; Informationen über diese vorbestimmte Auswahl A1 sind in der Datenbank DB gespeichert. In dieser Datenbank sind Erkennungskriterien der Zielkommunikationsendgeräte 5c und 5d gemeinsam mit einem Bezeichner für die Auswahl A1 gespeichert. Bei diesen Erkennungsmerkmalen kann es sich beispielsweise um Adressinformationen der Zielkommunikationsendgeräte 5c und 5d (z. B. deren Rufnummern) handeln. Das Zielkommunikationsendgerät 5c besitzt die Rufnummer "34" und das Zielkommunikationsendgerät 5d die Rufnummer "12".

In der Datenbank DB kann die vorbestimmte Auswahl A1 von Zielkommunikationsendgeräten beispielsweise in der folgenden Form gespeichert sein:

### Auswahl A1:

Zielkommunikationsendgerät mit Rufnummer "34": Konto ZK1

Zielkommunikationsendgerät mit Rufnummer "12": Konto ZK1

Dieser Datensatz der Datenbank DB beinhaltet die Information, das zu der vorbestimmten Auswahl A1 von Zielkommunikationsendgeräten die Zielkommunikationsendgeräte mit den Rufnummern "34" und "12" gehören und dass die Kommunikationsgebühren auf dem ersten Zusatzgebührenkonto ZK1 verbucht werden. Dabei handelt es sich um die Kommunikationsgebühren, die entstehen, wenn von dem Kommunikationsendgerät 3 zu den beiden vorbenannten Zielkommunikationsendgeräten hin Telekommunikationsverbindungen aufgebaut werden. Innerhalb der Auswahl A1 kann jedem Zielkommunikationsendgerät ein eigenes Konto zugeordnet sein oder es kann allen Zielkommunikationsendgeräten der Auswahl dasselbe Konto (wie oben dargestellt) zugeordnet sein.

Ebenso kann in der Datenbank DB ein weitere Datensatz vorhanden sein, der folgenden Inhalt aufweist:

### Auswahl A2:

Zielkommunikationsendgerät mit Rufnummer "56": Konto ZK2

Dieser Datensatz sagt aus, dass zu der vorbestimmten Auswahl A2 von Zielkommunikationsendgeräten das Zielkommunikationsendgerät mit der Rufnummer "56" gehört. Wenn Kommunikationsverbindungen von dem Kommunikationsendgerät 3 (mit der Rufnummer "90") zu dem Zielkommunikationsendgerät 5b mit der Rufnummer "56" aufgebaut werden, so sind die anfallenden Kommunikationsgebühren über das zweite Zusatzgebührenkonto ZK2 abzurechnen.

Von dem Kommunikationsendgerät 3 des Kindes aus soll nun eine Kommunikationsverbindung KV zu dem Zielkommunikationsendgerät 5c der Eltern hergestellt werden. Dazu wird am Kommunikationsendgerät 3 die Rufnummer "34" des Zielkommunikationsendgerätes 5c angewählt und eine Nachricht N1 vom Kommunikationsendgerät 3 an den Dienstevermittlungspunkt SSP gesendet, wobei diese Nachricht N1 evtl. über verschiedene weitere (in der Fig. 1 nicht dargestellte) Vermittlungsstellen geleitet wird. Diese Nachricht N1 enthält u. a. die angewählte Rufnummer "34" des Zielkommunikationsendgerätes 5c (die sog. Called Number CldNo) und die Rufnummer "90" des Kommunikationsendgerätes 3 (die sog. Calling Number ClgNo). Bei der Nachricht N1 kann es sich beispielsweise um eine Nachricht des Typs IAM handeln (Initial Adress Message). Der Dienstevermittlungspunkt SSP erkennt entweder an der angewählten Adresse "34" der Zielkommunikationseinrichtung 5c oder an der Andresse "90" des Kommunikationsendgerätes 3, dass bei der aufzubauenden Kommunikationsverbindung ein Verfahren zur Abrechnung von Kommunikationsgebühren durch den Dienstesteuerpunkt SCP durchgeführt werden soll und sendet daher eine Nachricht N2 an den Dienstesteuerpunkt SCP. Diese Nachricht N2 enthält ebenfalls die Adresse "34" des Zielkommunikationsendgerätes 5c (Cld No) und die Adresse "90" des Kommumnikationsendgerätes 3 (Clg No). Der Dienstesteuerpunkt SCP fragt nun in der Datenbank DB die Information ab, ob die Adresse "34" des Zielkommunikationsendgerätes 5c zu einer in der Datenbank abgespeicherten Aufstellung gehört. Die Datenbank sendet die Information zurück, dass diese Adresse zu der Aufstellung A1 gehört und dass dieser Aufstellung A1 das erste Zusatzgebührenkonto ZK1 der zweiten Kontoführungseinrichtung 12 zugeordnet ist. Daher bucht der Dienstesteuerpunkt SCP alle bei der Kommunikationsverbindung KV auftretenden Kommunikationsgebühren über die Nachrichtenverbindung 10b auf das erste Zusatzgebührenkonto ZK1 der zweiten Kontoführungseinrichtung 12 auf; das erste Zusatzgebührenkonto ZK1 wird also mit den Kommunikationsgebühren belastet.

Wird jedoch vom Kommunikationsendgerät 3 ausgehend das Zielkommunikationsendgerät 5b angerufen, so läuft das Verfahren analog des bisher Beschriebenen statt mit dem Unterschied, dass der Dienstesteuerpunkt SCP von der Datenbank DB die Information erhält, dass das Zielkommunikationsendgerät 5b zu der vorbestimmten Auswahl A2 gehört und dass die vorbestimmte Auswahl A2 dem zweiten Zusatzgebührenkonto ZK2 der dritten Kontoführungseinrichtung 13 zugeordnet ist. Demzufolge rechnet der Dienstesteuerpunkt SCP in diesem Fall die Kommunikationsgebühren über das zweite Zusatzgebührenkonto ZK2 ab.

Wird in einem dritten Beispielfall vom Kommunikationsendgerät 3 ein Zielkommunikationsendgerät 5a angerufen, welches keiner Auswahl zugeordnet ist, so erhält der Dienstesteuerpunkt SCP nach einer entsprechenden Abfrage von der Datenbank DB die Nachricht, dass das Zielkommunikationsendgerät 5a keiner Auswahl zugeordnet ist. Die Kommunikationsgebühren für diese Kommunikationsverbindung werden über das Gebührenkonto GK der ersten Kontoführungseinrichtung 11 abgerechnet, da das Gebührenkonto GK für alle Kommunikationsverbindungen verwendet wird, deren Zielkommunikationsendgeräte keiner vorbestimmten Auswahl von Zielkommunikationsendgeräten angehören (auch diese Information ist in der Datenbank DB abgespeichert).

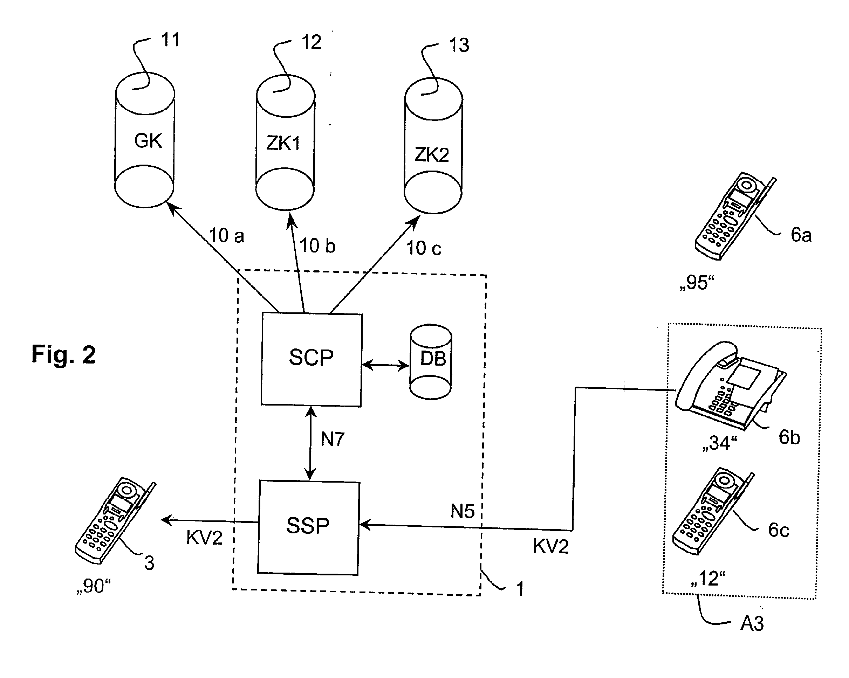

Figur 2 unterscheidet sich von der Figur 1 dadurch, dass anstelle der in der Figur 1 dargestellten Zielkommunikationsendgeräte 5a bis 5d in der Figur 2 ein Rufkommunikationsendgerät 6a mit der Rufnummer "95", ein Rufkommunikationsendgerät 6b mit der Rufnummer "34" und ein Rufkommunikationsendgerät 6c mit der Rufnummer "12" dargestellt sind. Die Rufkommunikationsendgeräte 6b und 6c gehören zu einer vorbestimmten Auswahl A3 an Rufkommunikationsendgeräten. Diese vorbestimmte Auswahl A3 an Rufkommunikationsendgeräten ist analog zu dem im Zusammenhang mit Figur 1 beschriebenen Verfahren in der Datenbank DB des Kommunikationsnetzes 1 derart gespeichert, dass zum einen ein Bezeichner der vorbestimmten Auswahl A3 und zum anderen als Identifikationsmerkmale der Rufkommunikationsendgeräte 6b und 6c beispielsweise deren Rufnummern gespeichert sind. Darüber hinaus ist in der Datenbank gespeichert, dass der Auswahl A3 an Rufkommunikationsendgeräten das Gebührenkonto GK zugeordnet ist.

Wird nun vom Rufkommunikationsendgerät 6b aus das Kommunikationsendgerät 3 angerufen (eine Kommunikationsverbindung KV2 aufgebaut), so wird von dem Rufkommunikationsendgerät 6b eine Nachricht N5 an den Dienstevermittlungspunkt SSP geschickt. Diese Nachricht N5 enthält die Telefonnummer "34" des Rufkommunikationsendgerätes 6b (als ClgNo) und die Adresse "90" des Kommunikationsendgerätes 3 (als CldNo). Analog zu dem im Zusammenhang in Figur 1 beschriebenen Verfahren wird daraufhin vom Dienstevermittlungspunkt SSP eine Nachricht N7 an den Dienstesteuerpunkt SCP geschickt. Diese Nachricht N7 enthält ebenfalls die ClgNo und die CldNo. Der Dienstesteuerpunkt fragt nun in der Datenbank DB ab, ob das Rufkommunikationsendgerät 6b mit der Rufnummer "34" zu einer vorbestimmten Auswahl an Rufkommunikationsendgeräten gehört. Die Datenbank DB sendet dem Dienstesteuerpunkt SCP die Information zu, dass das Rufkommunikationsendgerät 6b zu der vorbestimmten Auswahl A3 an Rufkommunikationsendgeräten gehört und dass dieser Auswahl A3 das Gebührenkonto GK zugeordnet ist. Daraufhin belastet der Dienstesteuerpunkt SCP über die Nachrichtenverbindung 10a das (dem Kommunikationsendgerät 3 zugeordnete) Gebührenkonto GK in der ersten Kontoführungseinrichtung 11 mit den im Zusammenhang mit dieser Kommunikationsverbindung auftretenden Kommunikationsgebühren.

In einem weiteren Beispiel sei angenommen, dass das Rufkommunikationsendgerät 6a einen Ruf zu dem Kommunikationsendgerät 3 aufbauen möchte. In diesem Falle sendet die Datenbank DB dem Dienstesteuerpunkt SCP die Information, dass das Rufkom-munikationsendgerät 6a keiner Auswahl an Rufkommunikationsendgeräten angehört. Daraufhin werden die im Zusammenhang mit diesem Ruf auftretenden Kommunikationsgebühren über ein in der Figur nicht dargestelltes fremdgeräteigenes Zusatzgebührenkonto abgerechnet, welches dem Rufkommunikationsendgerät 6a zugeordnet ist.

In den bisher beispielhaft beschriebenen Verfahren wurde ein Auftreten von vorbestimmten Kommunikationsverbindungseigenschaften dann erkannt, wenn ein Rufkommunikationsendgerät zu einer vorbestimmten Auswahl von Rufkommunikationsendgeräten gehört oder wenn ein Zielkommunikationsendgerät zu einer vorbestimmten Auswahl von Zielkommunikationsendgeräten gehört.

Als Kommunikationsverbindungseigenschaften können jedoch auch andere Größen ausgewertet werden: Es kann ausgewertet werden, ob die Kommunikationsverbindung innerhalb von vorgegebenen geographischen Bereichen aufgebaut wird (Ortsgespräche, Ferngespräche oder Auslandsgespräche), ob die Kommunikationsverbindung zu speziellen gebührenpflichtigen Diensten aufgebaut wird (Premium rate services), ob die Kommunikationsverbindung zu speziellen Zeitpunkten realisiert wird (Tageszeit, Wochentag, Monat, Jahr, Urlaubszeit, Feiertag, Arbeitszeit, Freizeit). Dann wären in der Datenbank DB anstelle der oder zusätzlich zu den vorbestimmten Auswahlen an Ruf- oder Ziel-Kommunikationsendgeräten z. B. Datensätze abgespeichert, die für das Kommunikationsendgerät 3 bei von diesem Kommunikationsendgerät ausgehenden Kommunikationsverbindungen eine Zuordnung von geographischen Bereichen zu Gebühren- oder Zusatzgebührenkonten erhalten. Ebenso könnten die Datensätze Zuordnungen von Zeit- bzw. Datumsbereichen zu Gebühren- oder Zusatzgebührenkonten enthalten.

Weiterhin kann als Kommunikationsverbindungseigenschaft auch die Höhe des Kontenstandes des Gebührenkontos oder eines der Zusatzgebührenkonten ausgewertet werden. Beispielsweise können, wenn ein Kontostand eines voraus bezahlten Gebührenkontos den Wert Null erreicht hat, die Gebühren statt über das vorausbezahlte Gebührenkonto über ein anderes Zusatzgebührenkonto abgerechnet werden. Weiterhin kann das Rufaufkommen ausgewertet werden, um ein Gebührenkonto oder ein Zusatzgebührenkonto zum Abrechnen der Kommunikationsgebühren zu bestimmen. Bei geringem Rufaufkommen, d. h. bei wenigen Rufen pro Zeiteinheit, werden die Kommunikationsgebühren z. B. über ein Gebührenkonto abgerechnet, bei einem hohen Rufaufkommen jedoch über ein Zusatzgebührenkonto. Weiterhin kann das verfahren so ausgestaltet sein, dass aus der Länge von realisierten Telekommunikationsverbindungen abgeleitet wird, welches Gebührenkonto mit den Kommunikationsgebühren belastet wird. So können z. B. Kommunikationsgebühren, die von kurzen Kommunikationsverbindungen herrühren, auf dem Gebührenkonto verrechnet werden, während beispielsweise Kommunikationsgebühren, die von langen Kommunikationsverbindungen herrühren, auf einem Zusatzgebührenkonto verrechnet werden. Dabei kann für das Zusatzgebührenkonto ein gegenüber dem Gebührenkonto günstigerer Tarif angewandt werden.

Das im Zusammenhang mit den Figuren 1 und 2 beschriebene Ausführungsbeispiel, bei dem das Kommunikationsendgerät 3 einem Kind zugeordnet ist, und die Zielkommunikationsendgeräte 5c und 5d bzw. die Rufkommunikationsendgeräte 6b und 6c den Eltern dieses Kindes zugeordnet sind, weist eine Reihe weiterer Vorteile auf: Wenn das Kind mittels des Kommunikationsendgerätes 3 mit seinen Eltern telefoniert, dann werden die Kommunikationsgebühren über das erste Zusatzgebührenkonto ZK1 abgerechnet, das von den Eltern bezahlt wird. Somit entstehen dem Kind keine Kosten und es kann unabhängig von finanziellen Überlegungen mit seinen Eltern telefonieren. Telefoniert das Kind jedoch mit einem anderen Endgerät, beispielsweise mit dem Zielkommunikationsendgerät 5a, welches beispielsweise einem Freund des Kindes zugeordnet sein kann, so werden die Kommunikationsgebühren über das Gebührenkonto GK abgerechnet, welches beispielsweise das persönliche Gebührenkonto des Kindes ist und vom Taschengeld des Kindes bezahlt wird. Über die Notwendigkeit, eigene Telefongespräche vom eigenen Geld bezahlen zu müssen, kann so ein erzieherischer Effekt erreicht werden.

Es soll ausdrücklich angemerkt werden, dass dieses Ausführungsbeispiel mit der Kind/Eltern-Beziehung nur eines von vielen möglichen Ausführungsbeispielen ist. Selbstverständlich kann das Kommunikationsendgerät 3 von einem beliebigen Kommunikationspartner benutzt werden. Das gleiche trifft auch für die Rufkommunikationsendgeräte und die Zielkommunikationsendgeräte zu.

## Patentansprüche

1. Verfahren zum Abrechnen von bei Benutzung eines Kommunikationsendgerätes (3) auftretenden Kommunikationsgebühren, bei dem
- ein dem Kommunikationsendgerät (3) zugeordnetes Gebührenkonto (GK) mit den Kommunikationsgebühren für die jeweilige Kommunikationsverbindung belastet wird,
**dadurch gekennzeichnet, dass**
- mindestens ein Zusatzgebührenkonto (ZK1, ZK2) neben dem Gebührenkonto (GK) zur Gebührenabrechnung verwendet wird,
- die jeweilige Kommunikationsverbindung (KV) auf ein Auftreten von vorbestimmten Kommunikationsverbindungseigenschaften untersucht wird und
- in Abhängigkeit vom Auftreten der vorbestimmten Kommunikationsverbindungseigenschaften entweder das Gebührenkonto (GK) oder eines der Zusatzgebührenkonten (ZK1, ZK2) mit den Kommunikationsgebühren belastet wird.

2. Verfahren nach Anspruch 1,
**dadurch gekennzeichnet, dass**
- als eines der Zusatzgebührenkonten (ZK1, ZK2) ein endgeräteigenes Zusatzgebührenkonto (ZK1, ZK2) verwendet wird, das dem Kommunikationsendgerät (3) zugeordnet ist.

3. Verfahren nach Anspruch 1 oder 2,
**dadurch gekennzeichnet, dass**
- als eines der Zusatzgebührenkonten (ZK1, ZK2) ein fremdgeräteigenes Zusatzgebührenkonto (ZK1, ZK2) verwendet wird, das einem anderen Endgerät (6a) als dem Kommunikationsendgerät (3) zugeordnet ist.

4. Verfahren nach einem der vorhergehenden Ansprüche,
**dadurch gekennzeichnet, dass**
- als Gebührenkonto (GK) ein vorausbezahltes Gebührenkonto (GK) belastet wird.

5. Verfahren nach einem der vorhergehenden Ansprüche,
**dadurch gekennzeichnet, dass**
- als Zusatzgebührenkonto (ZK1, ZK2) ein nachbelastbares Zusatzgebührenkonto (ZK1) verwendet wird, welches nach Beendigung der Kommunikationsverbindung belastet wird.

6. Verfahren nach einem der vorhergehenden Ansprüche,
**dadurch gekennzeichnet, dass**
- bei der Belastung des Gebührenkontos (GK) und der Belastung des Zusatzgebührenkontos (ZK1, ZK2) unterschiedliche Gebührentarife verwendet werden.

7. Verfahren nach einem der vorhergehenden Ansprüche,
**dadurch gekennzeichnet, dass**
- die Belastung des Gebührenkontos (GK) und die Belastung des Zusatzgebührenkontos (ZK1, ZK2) von verschiedenen Kostenträgern getragen werden.

8. Verfahren nach einem der vorhergehenden Ansprüche,
**dadurch gekennzeichnet, dass**
- das Zusatzgebührenkonto (ZK1) belastet wird, wenn von dem Kommunikationsendgerät (3) aus eine Kommunikationsverbindung zu einem Ziel-Kommunikationsendgerät (5c, 5d) aufgebaut wird, welches zu einer vorbestimmten Auswahl (A1) von Ziel-Kommunikationsendgeräten gehört, und
- das Gebührenkonto (GK) belastet wird, wenn von dem Kommunikationsendgerät (3) aus eine Kommunikationsverbindung zu anderen Ziel-Kommunikationsendgeräten (5a) aufgebaut wird.

9. Verfahren nach einem der vorhergehenden Ansprüche,
**dadurch gekennzeichnet, dass**
- beim Aufbau einer Kommunikationsverbindung zu dem Kommunikationsendgerät (3) von einem Ruf-Kommunikationsendgerät (6b, 6c) aus, welches zu einer vorbestimmten Auswahl (A3) von Ruf-Kommunikationsendgeräten gehört, das Gebührenkonto (GK) belastet wird und
- beim Aufbau einer Kommunikationsverbindung zu dem Kommunikationsendgerät (3) von einem anderen Ruf-Kommunikations-endgerät (6a) aus ein diesem Ruf-Kommunikationsendgerät (6a) zugeordnetes Zusatzgebührenkonto belastet wird.

10. Verfahren nach einem der vorhergehenden Ansprüche,
**dadurch gekennzeichnet, dass**
- als Kommunikationsverbindungseigenschaft der Zeitpunkt der Realisierung der Kommunikationsverbindung (KV) ausgewertet wird.

11. Verfahren nach einem der vorhergehenden Ansprüche,
**dadurch gekennzeichnet, dass**
- als Kommunikationsverbindungseigenschaft der Kontostand des Gebührenkontos (GK) oder des Zusatzgebührenkontos (ZK1, ZK2) zum Zeitpunkt der Realisierung der Kommunikationsverbindung (KV) ausgewertet wird.

12. Verfahren nach einem der vorhergehenden Ansprüche,
**dadurch gekennzeichnet, dass**
- die Auswertung der Kommunikationsverbindungseigenschaften von einem intelligenten Knoten (SCP) eines eine Struktur eines Intelligenten Netzes (IN) aufweisenden Kommunikationsnetzes (1) durchgeführt wird.
